# EUROPEAN PATENT SPECIFICATION

(11) **EP 4 036 376 B1**
(45) Date of publication and mention of the grant of the patent: **15.11.2023**
(21) Application number: 21214893.6
(22) Date of filing: 15.12.2021
(51) Int. Cl.: F01D 11/00, F01D 25/18, F02C 7/06, F02C 7/28, F16J 15/16

(54) **OIL-COOLED CARBON SEAL**
ÖLGEKÜHLTE KOHLENSTOFFDICHTUNG
JOINT DE CARBONE REFROIDI À L'HUILE

(30) Priority: 15.12.2020 US 202063125801 P
(43) Date of publication of application: 03.08.2022
(73) Proprietor: RTX Corporation, Farmington, CT 06032 (US)
(72) Inventor: SAWYERS-ABBOTT, Nigel David, South Glastonbury, 06073 (US); AMADOR, Armando, Wethersfield, 06109 (US); DAVIS, Todd A., Tolland, 06084 (US)
(74) Representative: Dehns

(56) References cited:
- EP-A1- 3 647 634
- EP-A1- 3 702 586
- EP-A2- 3 428 405

## Description

### BACKGROUND

The invention relates to gas turbine engines. More particularly, the invention relates to cooling of carbon seals in gas turbine engines.

Carbon seals are commonly used to seal between relatively rotating components in gas turbine engines. In typical situations, the annular carbon seal is spring biased into engagement with an annular seat (typically metallic such as a steel). Often, the carbon seal is on non-rotating static structure and the seat rotates with one of the engine shafts. The sliding engagement causes frictional heating. The heat must be dissipated. With a rotating seqat, it is common to use oil cooling. Generally, oil-cooled carbon seals are divided into two categories: "dry face" seals wherein the oil passes through passageways in the seat without encountering the interface between seal face and seat face; and "wet face" seals wherein the oil passes through the seat to the interface so that the oil that flows through the seat cools the seat but then lubricates the interface to further reduce heat generation.

For both forms of seals, the oil may be delivered through a nozzle and slung radially outward by the rotating component and collected in a radially outwardly closed and inwardly open collection channel from which the passageways extend further radially outward.

United States Patent 4,406,459 (the `459 patent), Davis et al., September 27, 1983, "Oil Weepage Return for Carbon Seal Plates" shows a seal with two sets of passageways through the seat. One set delivers oil to the interface as a wet face seal. Another set helps centrifugally pump out oil that has weeped radially inward from the interface.

United States Patent 4,928,978 (the `978 patent), Shaffer et al., May 29, 1990, "Rotating shaft seal" shows an alternative wet face seal.

United States Patent Application Publication 20180045316A1 (the '316 publication), Kovacik et al., February 15, 2018, "Hydrodynamic Seal Seat Cooling Features" shows a dry face seal wherein the oil passageways have two legs: an upstream leg receiving oil from a collection notch which in turn has collected the oil from a nozzle; and a downstream leg extending radially outward from the upstream leg generally close to and parallel to the sealing interface.

EP 3 647 634 A1 discloses a prior art seal system as set forth in the preamble of claim 1.

EP 3 702 586 A1 discloses a prior art gas turbine engine including seal plate providing increased cooling adjacent contact area.

### SUMMARY

From one aspect, there is provided a seal system as recited in claim 1.

There is also provided a method for manufacturing the seal system as recited in claim 10.

There is also provided a method for using the seal system as recited in claim 13.

There is also provided a gas turbine engine as recited in claim 15.

Features of embodiments are set forth in the dependent claims.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a partial partially schematic central axial sectional view of a first seal system falling outside the wording of the claims.
FIG. 1A is an enlarged view of a sealing interface area of the seal system of FIG. 1.
FIG. 2 is a partially schematic central axial sectional view of a gas turbine engine.
FIG. 3 is a partial partially schematic central axial sectional view of a second seal system falling outside the wording of the claims.
FIG. 3A is an enlarged view of a sealing interface area of the second seal system of FIG. 3.
FIG. 4 is an enlarged central axial sectional view of a third sealing system falling outside the wording of the claims.
FIG. 5 is an enlarged central axial sectional view of a fourth sealing system within the wording of the claims.
FIG. 6 is an enlarged central axial sectional view of a fifth sealing system within the wording of the claims.
FIG. 7 is an enlarged central axial sectional view of a sixth sealing system within the wording of the claims.

Like reference numbers and designations in the various drawings indicate like elements.

### DETAILED DESCRIPTION

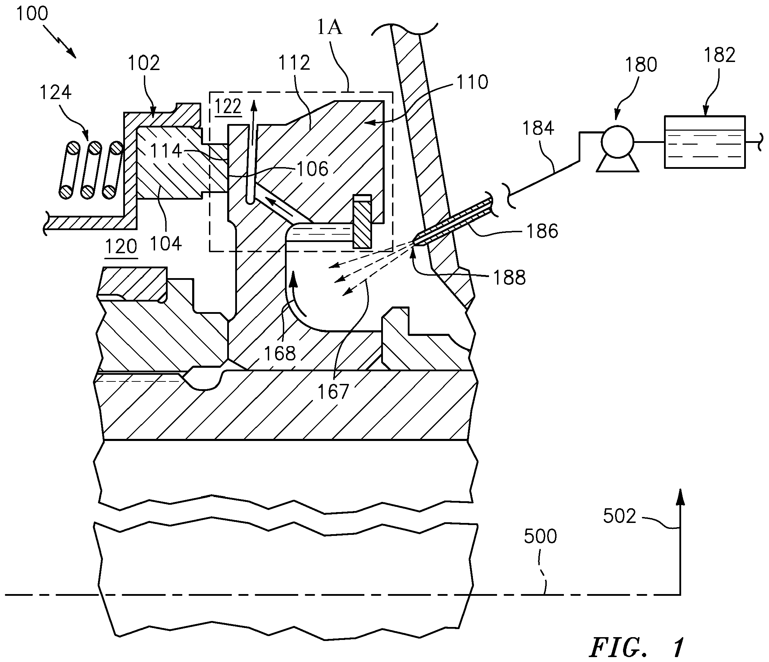

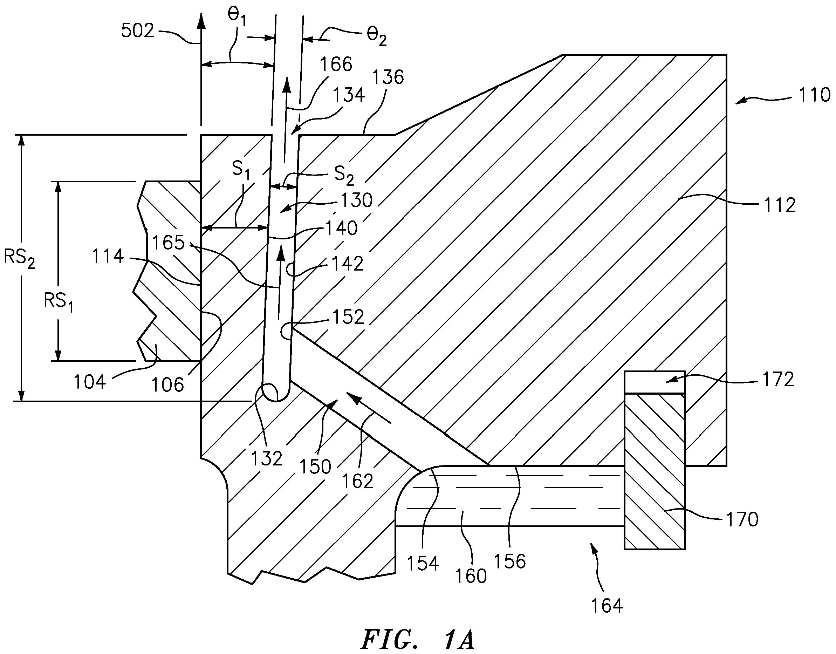

FIG. 1 shows a seal system 100, falling outside the wording of the claims, having a first member 102 carrying a seal 104. The example seal 104 is a carbon seal having a seal surface or face 106. The example seal 104 is formed as a body of revolution about an axis 500 which is an axis of relative rotation between the first member 102 and a second member 110. FIG. 1 further shows an outward radial direction 502. The example seal face 106 is a radial face. The second member 110 comprises a piece 112 (seat piece) forming a seat for the seal with a seat surface or face 114 in sliding sealing engagement with the seal face 106 at a sealing interface.

The example illustrated configuration is a dry face configuration. The seal 104 may be biased into axially compressive engagement with the seat face 114 via one or more factors including pressure bias and spring loading. The seal 104 is shown as sealing a space or region 120 inboard of the sealing interface from a space or region 122 outboard. Depending upon configuration, the pressure difference may bias the seal in either direction. FIG. 1 further shows a spring 124 (e.g., a coil spring) providing the required bias. There may be a circumferential array of such springs about the axis 500 each under axial compression.

In one group of examples discussed below, the second member 110 is rotating in an inertial frame of reference while the first member 102 is either stationary or counter-rotating. The rotating of the second member 110 may create a centrifugal oil flow action discussed further below.

In operation, the relative rotation produces frictional heating at the sliding interface between the faces 106 and 114. Cooling to dissipate this heat is therefore desirable. As discussed above, it is well-known to provide a circumferential array of oil flow passages through a seat. These are typically drilled after machining gross features of the seat. FIG. 1A, however, shows the seat piece 112 as having an annular channel 130 axially spaced from the seat face 114. The example annular channel extends from a radially inboard inner diameter (ID) base 132 to a radially outboard outer diameter (OD) opening 134 in an OD surface 136 of the seat piece 112. The channel 130 also has a first surface or face 140 and a second surface or face 142 axially spaced therefrom. The channel 130 may be machined in the piece 112 by conventional methods, such as turning or milling, or advanced methods, such as EDM.

FIG. 1A further shows a circumferential array of passageway legs (passageways or feed passageways) 150 (e.g., drilled right circular cylindrical passageways) connected to the annular channel 130 at respective first ends 152 and open to a surface portion 156 of the piece 112 at their second ends 154. An example number of passageways 150 is 10 to 100, more particularly 20 to 80 or 25 to 55 in seal sizes used on gas turbine engines. In operation, centrifugal action causes an accumulation 160 of oil to be captured by the second member 110 in a radially outwardly closed collection channel 164. The passageway second ends 154 form outlets from the collection channel allowing oil flows 162 to pass outward through the passageways to the channel 130. The flows 162 from the individual passageways 150 merge to form a flow 165 in the channel 130. The flow 165 flows radially outward to be discharged as a discharge flow 166. The radial oil flow 165 in the channel cools the seat piece 112 and, thereby, cools the seat face and seal face.

The example feed passageways 150 are shown oblique to both the axial and radial directions to reduce abrupt flow transitions (e.g., relative to an alternative where they extended axially from the collection channel where there would be an abrupt transition to the channel 130).

To form the channel 164, FIG. 1A shows a weir formed by an annular member 170 accommodated partially in a radially inwardly open channel 172 in the seat piece 112. A portion of the member 170 protrudes radially inwardly from an opening of the channel 172 at the surface 156. As an oil source, FIG. 1 shows an oil pump 180 delivering oil from a reservoir 182 via a conduit 184. The conduit 184 may terminate at one or more nozzles 186. Each nozzle may have a respective outlet 188 discharging a spray 167 of the oil. The sprayed oil collects on a surface of the first member and is slung radially outward as a flow 168 (FIG. 1) to the channel 164. Oil from the flow 166 may be collected and returned to the reservoir 182 by a conventional collection apparatus (not shown).

FIG. 1A further shows the seat face 106 having a radial span RS₁ and the channel 130 as having a radial span RS₂. The example radial spans are oriented so that the channel 130 fully radially overlaps the seal face 106. This provides a short thermal conductive flowpath for heat to pass from the seat face 114 to the flow 165 in the channel 130. FIG. 1A further shows an angle θ₁ between the seal face/seat face on the one hand and the adjacent channel face 140 on the other hand. Example θ₁ is greater than zero. More particularly, with the seal face extending exactly or close to exactly radially, the adjacent portion of the channel face 140 diverges at the angle θ₁ in the radial outward direction. This divergence from radial helps cause the flow 165 to remain attached to the face 140. The opposite inclination would potentially risk flow separation and loss of heat conduction. Example θ₁, however, may be fairly small in order to maintain cooling effectiveness as the flow 165 progresses radially outward toward the outer diameter (OD) extent of the seal face. Thus, example θ₁ is 0-30.0°, more particularly, 0-12.0°, 0.5-10.0°, or 1.0-10.0° or 2.0-8.0°. The second face 142 may similarly diverge from the first face at an angle θ₂. But this divergence θ₂ may represent an artifact of manufacturing such as from a tapered bit. Example θ₂ is 0° to 30.0°, more particularly 0° to 15.0° or 0° to 10.0° or 0° to 5.0°. Alternative lower ends on those ranges are 1.0° and 3.0°. Example span S₁ between the seat face 114 and the channel face 140 is 0.030 inch to 0.250 inch (0.76 mm to 6.35 mm), more narrowly 2.0 mm to 6.0 mm or 2.5 mm to 5.0mm. Example channel width S₂ is 0.030 inch to 0.250 inch (0.76 mm to 6.35 mm), more narrowly 1.0 mm to 6.0 mm or 2.0 mm to 6.0 mm or 2.5 mm to 5.0mm.

An example member 170 may be formed by spiral winding such as used for retaining rings. Alternatively, a weir may be integrally machined into seat piece 112.

In various implementations, the use of the annular channel 130 may have one or more of several advantages relative to any particular baseline. For example, when contrasted with a baseline arrangement as in the '316 publication, the channel 130 may provide more circumferential uniformity of cooling which may help reduce heat generation and wear. For example, discrete passages may produce a circumferential array of cool zones interspersed with warmer zones. The differential thermal expansion of cool portions of the seat and hot portions of the seat may produce an uneven seat surface generating unnecessary heat and potentially compromising sealing.

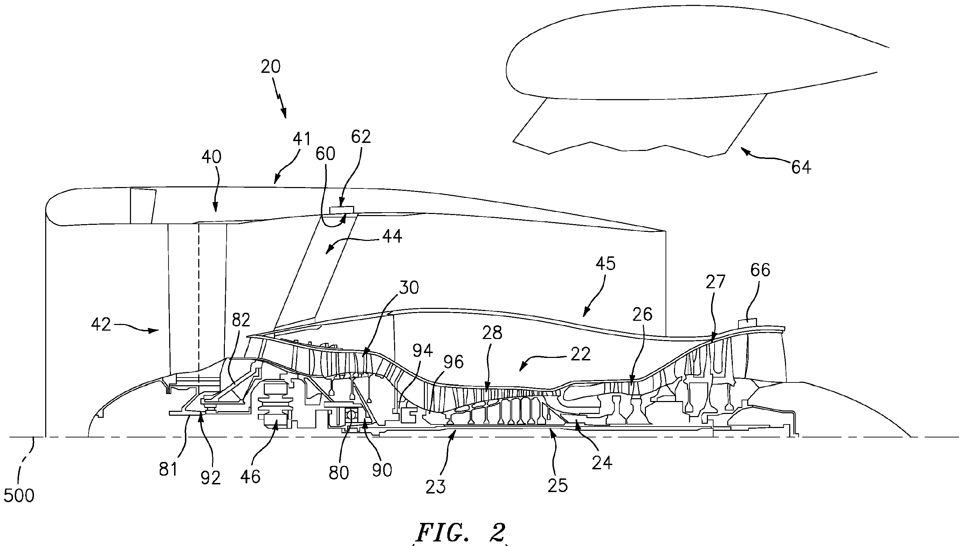

FIG. 2 shows a turbofan engine 20 having an engine case 22 containing a rotor shaft assembly 23. An example engine is a turbofan. Alternatives include turbojets, turboprops, turboshafts, and industrial gas turbines. The example turbofan is a two-spool turbofan. Via high 24 and low 25 shaft portions of the shaft assembly 23, a high pressure turbine (HPT) section 26 and a low pressure turbine (LPT) section 27 respectively drive a high pressure compressor (HPC) section 28 and a low pressure compressor (LPC) section 30. The engine extends along a longitudinal axis (centerline) 500 from a fore end to an aft end. Adjacent the fore end, a shroud (fan case) 40 encircles a fan 42 and is supported by vanes 44. An aerodynamic nacelle 41 around the fan case is shown and an aerodynamic nacelle 45 around the engine case is shown.

Although a two spool (plus fan) engine is shown, an alternative variation involves a three spool (plus fan) engine wherein an intermediate spool comprises an intermediate pressure compressor (IPC) between the LPC and HPC and an intermediate pressure turbine (IPT) between the HPT and LPT. In another aspect a three-spool engine, the IPT drives a low pressure compressor while the LPT drives a fan, in both cases either directly or indirectly via a transmission mechanism, for example a gearbox.

In the example embodiment, the low shaft portion 25 of the rotor shaft assembly 23 drives the fan 42 through a reduction transmission 46. An example reduction transmission is an epicyclic transmission, namely a planetary or star gear system.

FIG 2 also shows at their outboard ends, the vanes 44 have flanges 60 bolted to an inner ring structure of the fan case to tie the outboard ends of the vanes together. Integral therewith or fastened thereto is a forward mounting structure 62 (e.g., clevises which form part of a four bar mechanism) and provides forward support to the engine (e.g., vertical and lateral support). To mount the engine to the aircraft wing, a pylon 64 is mounted to the structure 62 (e.g., forming the outer part thereof). The pylon is also mounted to a rear engine mount 66.

In one example, FIG. 2 shows a location 90 for the seal system 100 wherein the first member 102 may be mounted to (or integrally formed with) a static bearing support 80 and the second member 110 may be mounted to (or integrally formed with) a forward portion of the low shaft 25. Alternatively, in a location 92, the first member 102 may be mounted to (or integrally formed with) a static hub 82 and the second member 110 mounted to (or integrally formed with) a fan shaft 81. In these two illustrated examples, the seal system is positioned adjacent one end of a bearing system to isolate the bearing system. Similar locations may be provided for other bearings in the engine. For example, locations 94 and 96 may represent locations where the sealing is between the high spool and static structure on either side of a bearing supporting the high spool.

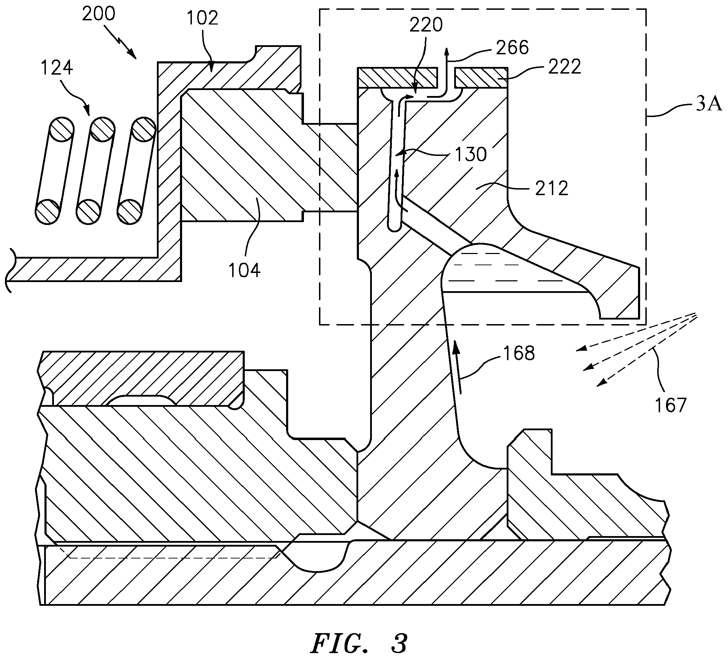

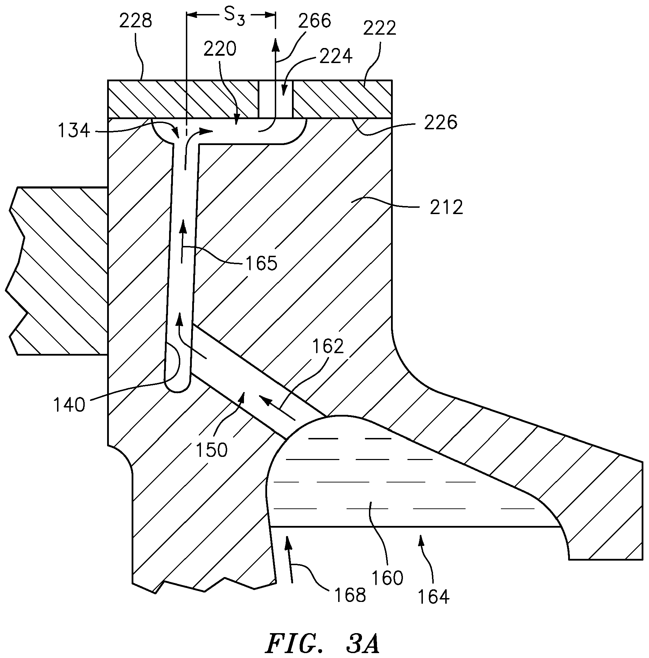

FIG. 3 shows an alternate seal system 200 configuration, also falling outside the wording of the claims, otherwise similar to FIG. 1 with several exceptions. A first exception is that the cooling channel 130 extends radially outward to a plenum 220 (FIG. 3A). The plenum 220 is defined by the combination of: a further annular channel in a first seat piece 212; and a second piece 222 encircling and attached to the first piece. The example second piece 222 is formed as an annular sleeve having a circumferential array of apertures 224 extending between an inner diameter (ID) surface 226 and an outer diameter (OD) surface 228. The apertures (e.g., drilled holes) form plenum outlets. The ID surface is engaged to the OD surface of the first seat piece 212 fore and aft of the plenum 220 (e.g., via interference fit or a braze j oint). Alternative configurations may have the second piece 222 as nondestructively removable from the first piece such as via a retaining clip or wire (e.g. snap ring). Similarly, in such removable configurations, separate seals may be provided between the pieces (e.g., O-rings).

The apertures 224 are axially offset from the outer diameter opening of the channel 130 to the plenum 220. An example number of apertures 224 is 10 to 100, more particularly 20 to 80 or 25 to 55 in seal sizes used on gas turbine engines. The plenum 220 and apertures 224 may provide one or more of several functions. First, the apertures may provide a metering function (metering/restricting discharge flows 266) helping ensure the flow has sufficient residence time in the channel 130 to not separate from the face 140 and to provide sufficient cooling. Additionally, residence time in the plenum 220 may further cool the first seat piece 212 to maximize the cooling. The axial offset of the apertures 224 from the outlet or OD end of the channel 134 helps ensure that flow is along the length of the plenum 220 to again maximize cooling efficiency. Example offset S₃ (measured center-to-center) is 0.00 inches to 0.50 inches (0.0 mm to 12.7 mm), more particularly, 0.00 inches to 0.30 inches (0.0 mm to 7.6 mm) or, for non-zero values 0.10 inch to 0.30 inch (2.5 mm to 7.6 mm) or 0.10 inch to 0.50 inch (2.5 mm to 12.7 mm).

A further difference between the FIG. 3 and FIG. 1 systems is the FIG. 3 presence of an integral weir formed in the first piece. This may be more representative of conventional weirs.

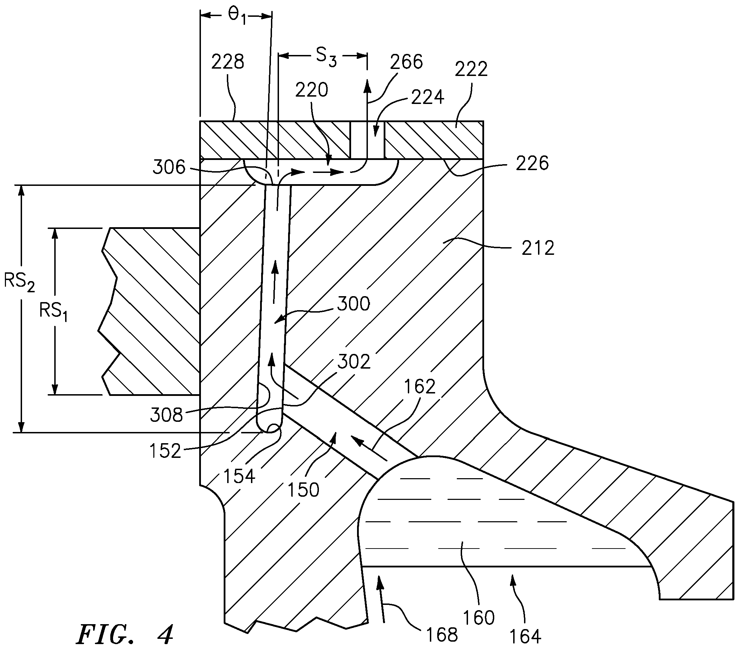

The plenum 220 could be used with seats having multiple radial passageways 300 (FIG. 4, e.g., a circumferential array of passageways) rather than a single continuous annular passageway 130. The example passageways 300 may be drilled circular holes. Each example passageway 300 has an inlet 302 at the end 152 of a respective associated one of the passageways 150 (feed passageways). The inlet 302 may be at or near an inner diameter (ID) end 304 of the passageway. The passageway has an outer diameter end 306 forming a passageway outlet. The example inlet is in a lateral surface 308 of the passageway.

Passageway radial span RS₁ and angle θ₁ may be as discussed above for the FIGs. 1 and 3 arrangements. The passageway count may also be similar. However, it is also possible that the angle θ₁ have negative values that actually converge toward the radial direction and face 114 in the outward radial direction.

An example diameter of the passageways 300 may be at least 0.060 inch (0.152 centimeters). For example, it may be an example 0.060 inch (0.152 centimeters) to 0.30 inch (0.762 centimeter). The diameter may be the same or less than the diameter of the passageways 150 dependent on the cooling needs. This may allow maintenance of flow along the passageway 300 surface. The larger cross-sectional area of the feed passageway 150 helps provide sufficient oil. However, the further restriction provided by the plenum outlets may help maintain surface contact along the radial span of the passageways 300. Thus, the plenum outlets 224 may be smaller in number and/or individual cross-sectional area than the passageways 300. Thus, total plenum cross-sectional area may be smaller than total passageway 300 cross-sectional area. A proximity of the surface of the passageway 300 to the seat face may be of similar span to that S₁ of the channel noted above. Manufacture may be via conventional means as noted above with drilling of the feed passageways and cooling passageways into a cast and/or machined precursor of the seat.

Although the example FIG. 4 arrangement is based upon the FIG. 3 configuration having an integral weir, alternative arrangements could be made based upon other seat configurations including the separate weir of FIG. 1. Similarly, the plenum 220 could be added to yet other configurations of passageways. For example, they may include passageways with a partially tangential orientation such as those of the '316 publication noted above.

However, to increase heat transfer to the flows through the passageways, the passageways may have surface-enhanced passageway cross-sections. The surface enhancements increase the surface area for a given passage cross-sectional area or transverse linear dimension. Examples include splined or fluted cross-sections, and the like. Such surface-enhanced passageways could be formed by techniques such as plunge electrodischarge machining (EDM). Such EDM may be done after drilling a pilot hole or without a pilot hole.

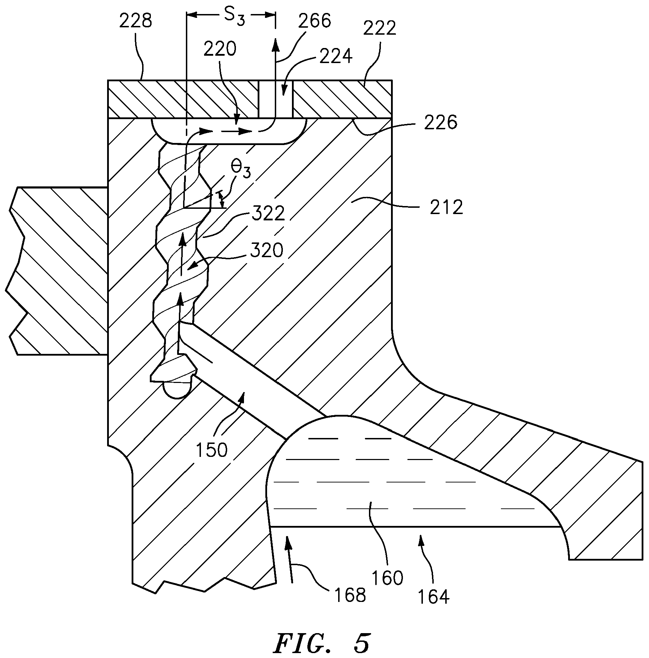

In addition to cylindrical surface-enhanced passageways (e.g., ridges such as straight splines or fluting (not shown) separated by straight grooves or channels, falling outside the wording of the claims), other enhancements, falling inside the wording of the claims, may take other forms such as passageways 320 (FIG. 5) having a spiral enhancement 322 (ridge(s) or projection(s)) leaving groove(s) or recess(es)/channel(s) between projections or turns of a projection. The example spiral enhancement is spiral/helical splines or fluting shown with a relatively high helix angle θ₃ (a ramping helix angle vs. an off-axial helix angle of 90°-θ₃) that imparts swirl to the fluid flowing radially outward. An example of θ₃ is broadly 20.0° to 88.0°, more narrowly 45.0° to 88.0° or 70.0° to 88.0° for EDM-formed enhancements. The swirl may help keep the surface of the passageway 320 wetted for high heat transfer and residence time for improved heat absorption.

Such enhancements may, for example, be made via plunge EDM (after pre-drilling of a pilot hole or without pilot hole) with a rotation of the EDM electrode during the plunge. FIG. 5 shows the enhancements 322 as including a plurality of alternating ridges/projections and grooves/recesses when viewed in axial section of the passageway. The spiral is shown schematically, particularly its intersection with the passageway 150. An example spiral ridge/projection count per passageway is four to twenty, more particularly four to ten. Count will generally be geometrically related to the helix angle and projection/groove width. Example projection height (radial difference relative to passage way axis of projection apex and recess base) is 5.0% to 30.0% of the radius at the groove base, more narrowly 10.0% to 25%. A proximity of the surface of the passageway 320 to the seat face (e.g., measured from the adjacent location on the groove base) may be of similar span to that S₁ of the channel noted above.

For the example surface-enhanced passageways, the passageway cross-sectional area (or minimum passageway cross-sectional area if there is lengthwise/streamwise variation) may be the same in absolute and relative terms as that noted above for the passageway 300.

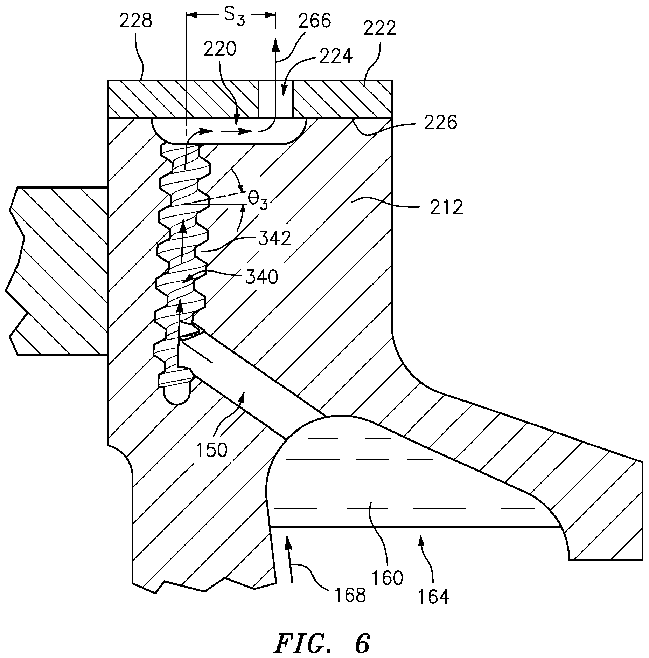

Alternative spiral feature(s) include relatively low helix angle features such as thread(s). FIG. 6 shows passageway 340 with such a thread 342. Potential threads include single-lead threads, multiple lead threads, and so forth. Manufacture techniques include drilling and tapping or, as noted above, EDM. Again, viewed in section, the one or more threads appear as a series of ridges/projections and grooves/recesses. The thread(s) may have a relatively low helix angle θ₃ such as found in typical common thread forms 2.0° to 15.0° or 4.0° to 12.0°. Thread height may be as described for the FIG. 5 spiral enhancement.

Example threads are coarse threads wherein the thread(s) have a larger pitch (few threads per axial distance) than fine threaded tapped holes which have a smaller pitch (more threads per axial distance). Relatively coarse threads may limit stress concentrations that may otherwise contribute to cracking. Examples of coarse threads include, but are not limited to, ACME, worm, ball, and trapezoidal threads of sufficiently coarse pitch to avoid stress concentrations. Particular desirable coarseness may be determined by longevity testing such that stress failures in the passageways do not occur over seat face lifetimes. The optimal form may depend on rotational speed of the shaft, radius of the seal interface, oil temperature and viscosity, and seal temperature at target operating conditions.

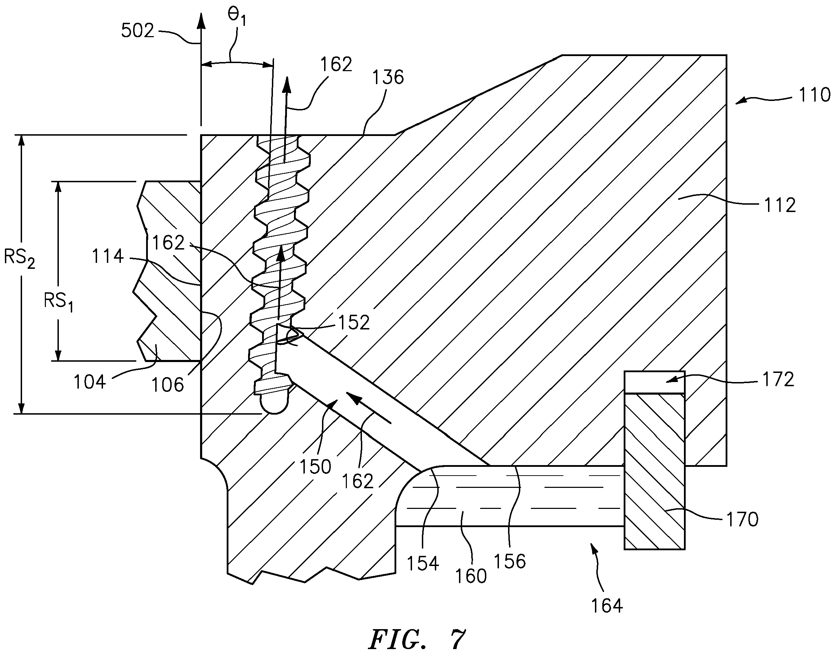

Additionally, the surface enhancements may be employed in the absence of the plenum 220. FIG. 7 shows a passageway 360 having a spiral enhancement 362 similar to that of FIG. 6 but without a plenum.

Further manufacture variations include additive manufacture of the seat. This allows passageways such as non-straight passageways and/or complex enhancements to be formed with the surface enhancements. For example, the passageways may spiral in the circumferential direction.

Additional variations include seals where the oil is not delivered from a spray nozzle, but instead passes outward from a plenum (e.g., as in the `459 and `978 patents above) or via other means.

Further variations include seals where cooling fluids (particularly liquids) other than oil are used.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline seal or machine configuration, details of such baseline may influence details of particular implementations. Accordingly, other embodiments are within the scope of the following claims.

## Claims

1. A seal system (200) comprising:
a first member (102) comprising a carbon seal (104) with a seal face (106); and
a second member (110) comprising a seat (112; 212) with a seat face (114) and a plurality of cooling passageways (300; 320; 340; 360),
wherein:
the second member (110) is rotatable about an axis (500) relative to the first member (102);
the seal face (106) and the seat face (114) are in sliding sealing engagement; and
the cooling passageways (300; 320; 340; 360) have respective surface enhancements (322; 342; 362),
**characterised in that**:
each cooling passageway surface enhancement (322; 342; 362) is at least one spiral (322; 342; 362).

2. The seal system (200) of claim 1, wherein:
each at least one spiral (322; 342; 362) has a helix angle (θ₃) of 45.0° to 88.0°.

3. The seal system (200) of claim 1 or 2, wherein:
each cooling passageway surface enhancement (322; 342; 362) is a thread (322; 342; 362).

4. The seal system (200) of any preceding claim, wherein:
the second member (110) further has a collection channel (164); and
the second member (110) further has a plurality of feed passageways (150), each feed passageway (150) coupling an associated said cooling passageway (300; 320; 340; 360) to the collection channel (164) preferably wherein:
the second member has a plenum (220) is defined by the combination of: an annular channel in a first seat piece (212); and a second piece (222) encircling and attached to the first piece;
the cooling passageways are in the first piece; and
the second piece (222) is formed as an annular sleeve having a circumferential array of outlet apertures (224) extending between an inner diameter (ID) surface (226) and an outer diameter (OD) surface (228).

5. The seal system (200) of claim 4, wherein:
each of said feed passageways (150) is positioned at an oblique angle relative to both the collection channel (164) and the associated cooling passageway (300; 320; 340; 360).

6. The seal system (200) of claim 4 or 5, including between 10 and 100 cooling passageways (300; 320; 340; 360) and between 10 and 100 feed passageways (150).

7. The seal system (200) of any preceding claim, wherein the second member (110) is coupled to and configured to rotate with a rotatable shaft (24; 25), and wherein the first member (102) is configured to remain stationary while the second member (110) rotates with the rotatable shaft (24; 25).

8. The seal system (200) of any preceding claim, wherein:
the cooling passageways (320; 340; 360) are threaded passageways (320; 340; 360) having grooves;
a distance between an outermost edge of the grooves of the threaded passageways (320; 340; 360) and the seat face (114) is between 0.76mm and 6.35mm; and
an angle (θ₁) formed between a center axis of each cooling passageway (320; 340; 360) and the seat face (114) is greater than zero.

9. The seal system (200) of claim 4 or any of claims 5 to 8 as dependent on claim 4, wherein the seal system (200) is a dry face seal, and wherein the feed passageways (150) and cooling passageways (300; 320; 340; 360) are configured to provide cooling fluid such that the cooling fluid remains separate from an interface where the seal face (106) and the seat face (114) are in sliding engagement.

10. A method for manufacturing the seal system (200) of any preceding claim, the method comprising:
forming a precursor of the second member (110); and
forming the surface enhancements (322; 342; 362) by at least one of tapping and EDM.

11. The method of claim 10 further comprising forming precursors of the cooling passageways (300; 320; 340; 360) by drilling.

12. The method of claim 10 or 11 comprising forming the surface enhancements (322; 342; 362) by EDM, wherein the EDM is plunge EDM with a rotation of an EDM electrode during the plunge.

13. A method for using the seal system (200) of any preceding claim, the method comprising:
rotating the second member (110) about the axis (500) relative to the first member (102);
the rotation driving respective flows of fluid (162, 165) through the passageways (300; 320; 340; 360); and
the flows (162, 165) cooling the second member (110).

14. The method of claim 13, wherein:
the surface enhancements (322; 342; 362) induce swirl of the respective flows in the passageways (300; 320; 340; 360).

15. A gas turbine engine (20) comprising:
an engine case (22), a fan (42), a compressor section (28, 30), a turbine section (26, 27) and a rotating shaft (24; 25); and
the seal system (200) of any preceding claim positioned within the compressor section (28, 30) of the gas turbine engine (20).

## Patentansprüche

1. Dichtungssystem (200), umfassend:
ein erstes Element (102), das eine Kohlenstoffdichtung (104) mit einer Dichtungsfläche (106) umfasst; und
ein zweites Element (110), das einen Sitz (112; 212) mit einer Sitzfläche (114) und eine Vielzahl von Kühlkanälen (300; 320; 340; 360) umfasst,
wobei:
das zweite Element (110) relativ zu dem ersten Element (102) um eine Achse (500) drehbar ist;
die Dichtungsfläche (106) und die Sitzfläche (114) in gleitendem Dichtungseingriff stehen; und
die Kühlkanäle (300; 320; 340; 360) jeweilige Oberflächenvergrößerungen (322; 342; 362) aufweisen,
**dadurch gekennzeichnet, dass**:
jede Kühlkanaloberflächenvergrößerung (322; 342; 362) mindestens eine Spirale (322; 342; 362) ist.

2. Dichtungssystem (200) nach Anspruch 1, wobei:
jede mindestens eine Spirale (322; 342; 362) einen Schrägungswinkel (θ₃) von 45,0° bis 88,0° aufweist.

3. Dichtungssystem (200) nach Anspruch 1 oder 2, wobei:
jede Kühlkanaloberflächenvergrößerung (322; 342; 362) ein Gewinde (322; 342; 362) ist.

4. Dichtungssystem (200) nach einem der vorhergehenden Ansprüche, wobei:
das zweite Element (110) ferner einen Sammelkanal (164) aufweist; und
das zweite Element (110) ferner eine Vielzahl von Zuführkanälen (150) aufweist, wobei jeder Zuführkanal (150) einen zugehörigen Kühlkanal (300; 320; 340; 360) mit dem Sammelkanal (164) verbindet, wobei vorzugsweise:
das zweite Element einen Sammelraum (220) aufweist, der durch die Kombination von Folgendem definiert wird: einem ringförmigen Kanal in einem ersten Sitzteil (212); und einem zweiten Teil (222), das das erste Teil umgibt und daran befestigt ist;
die Kühlkanäle sich in dem ersten Teil befinden; und
das zweite Teil (222) als ringförmige Hülse ausgebildet ist, die in Umfangsrichtung eine Anordnung von Auslassöffnungen (224) aufweist, die sich zwischen einer Innendurchmesserfläche (ID-Fläche) (226) und einer Außendurchmesserfläche (OD-Fläche) (228) erstreckt.

5. Dichtungssystem (200) nach Anspruch 4, wobei:
jeder der Zuführkanäle (150) sowohl relativ zu dem Sammelkanal (164) als auch zu dem zugehörigen Kühlkanal (300; 320; 340; 360) in einem schrägen Winkel positioniert ist.

6. Dichtungssystem (200) nach Anspruch 4 oder 5, beinhaltend zwischen 10 und 100 Kühlkanälen (300; 320; 340; 360) und zwischen 10 und 100 Zuführkanälen (150).

7. Dichtungssystem (200) nach einem der vorhergehenden Ansprüche, wobei das zweite Element (110) mit einer drehbaren Welle (24; 25) gekoppelt und so ausgelegt ist, dass es sich mit dieser dreht, und wobei das erste Element (102) so ausgelegt ist, dass es unbeweglich bleibt, während sich das zweite Element (110) mit der drehbaren Welle (24; 25) dreht.

8. Dichtungssystem (200) nach einem der vorhergehenden Ansprüche, wobei:
die Kühlkanäle (320; 340; 360) Gewindekanäle (320; 340; 360) sind, die Nuten aufweisen;
ein Abstand zwischen einer äußersten Kante der Nuten der Gewindekanäle (320; 340; 360) und der Sitzfläche (114) zwischen 0,76 mm und 6,35 mm beträgt; und
ein Winkel (θ₁), der zwischen einer Mittelachse jedes Kühlkanals (320; 340; 360) und der Sitzfläche (114) gebildet wird, größer als null ist.

9. Dichtungssystem (200) nach Anspruch 4 oder einem der Ansprüche 5 bis 8 in Abhängigkeit von Anspruch 4, wobei das Dichtungssystem (200) eine Trockenflächendichtung ist und wobei die Zuführkanäle (150) und Kühlkanäle (300; 320; 340; 360) ausgelegt sind, um Kühlflüssigkeit bereitzustellen, sodass die Kühlflüssigkeit von einer Schnittstelle getrennt bleibt, an der die Dichtungsfläche (106) und die Sitzfläche (114) in gleitendem Eingriff stehen.

10. Verfahren zur Herstellung des Dichtungssystems (200) nach einem der vorhergehenden Ansprüche, wobei das Verfahren umfasst:
Bilden eines Vorläufers des zweiten Elements (110); und
Bilden der Oberflächenvergrößerungen (322; 342; 362) durch mindestens eines von Gewindeschneiden und Funkenerosion.

11. Verfahren nach Anspruch 10, ferner umfassend Bilden von Vorläufern der Kühlkanäle (300; 320; 340; 360) durch Bohren.

12. Verfahren nach Anspruch 10 oder 11, umfassend das Bilden der Oberflächenvergrößerungen (322; 342; 362) durch Funkenerosion, wobei die Funkenerosion eine Taucherosion mit einer Drehung einer Funkenerosionselektrode während des Eintauchens ist.

13. Verfahren zum Verwenden des Dichtungssystems (200) nach einem der vorhergehenden Ansprüche, wobei das Verfahren umfasst:
Drehen des zweiten Elements (110) um die Achse (500) relativ zu dem ersten Element (102);
wobei die Drehung jeweilige Flüssigkeitsströme (162, 165) durch die Kanäle (300; 320; 340; 360) antreibt; und
die Ströme (162, 165) das zweite Element (110) kühlen.

14. Verfahren nach Anspruch 13, wobei:
die Oberflächenvergrößerungen (322; 342; 362) eine Verwirbelung der jeweiligen Ströme in den Kanälen (300; 320; 340; 360) induzieren.

15. Gasturbinentriebwerk (20), umfassend:
ein Motorgehäuse (22), einen Lüfter (42), einen Verdichterabschnitt (28, 30), einen Turbinenabschnitt (26, 27) und eine rotierende Welle (24; 25); und
das Dichtungssystem (200) nach einem der vorhergehenden Ansprüche, das innerhalb des Verdichterabschnitts (28, 30) des Gasturbinentriebwerks (20) positioniert ist.

## Revendications

1. Système de joint (200) comprenant :
un premier élément (102) comprenant un joint de carbone (104) avec une face de joint (106) ; et
un second élément (110) comprenant un siège (112 ; 212) avec une face de siège (114) et une pluralité de passages de refroidissement (300 ; 320 ; 340 ; 360),
dans lequel :
le second élément (110) peut tourner autour d'un axe (500) par rapport au premier élément (102) ;
la face de joint (106) et la face de siège (114) sont en prise étanche coulissante ; et
les passages de refroidissement (300 ; 320 ; 340 ; 360) présentent des améliorations de surface respectives (322 ; 342 ; 362),
**caractérisé en ce que** :
chaque amélioration de la surface de passage de refroidissement (322 ; 342 ; 362) est constituée d'au moins une spirale (322 ; 342 ; 362) .

2. Système de joint (200) selon la revendication 1, dans lequel : chaque au moins une spirale (322 ; 342 ; 362) a un angle d'hélice (θ₃) de 45,0° à 88,0°.

3. Système de joint (200) selon la revendication 1 ou 2, dans lequel :
chaque amélioration de la surface de passage de refroidissement (322 ; 342 ; 362) est un filetage (322 ; 342 ; 362).

4. Système de joint (200) selon une quelconque revendication précédente, dans lequel :
le second élément (110) comporte également un canal de collecte (164) ; et
le second élément (110) comporte également une pluralité de passages d'alimentation (150), chaque passage d'alimentation (150) couplant un dit passage de refroidissement associé (300 ; 320 ; 340 ; 360) au canal de collecte (164), de préférence dans lequel :
le second élément comporte un plénum (220) défini par la combinaison : d'un canal annulaire dans une première pièce de siège (212) ; et d'une seconde pièce (222) encerclant et fixée à la première pièce ;
les passages de refroidissement sont dans la première pièce ; et
la seconde pièce (222) est formée sous la forme d'un manchon annulaire ayant un réseau circonférentiel d'ouvertures de sortie (224) s'étendant entre une surface de diamètre intérieur (ID) (226) et une surface de diamètre extérieur (OD) (228).

5. Système de joint (200) selon la revendication 4, dans lequel : chacun desdits passages d'alimentation (150) est positionné selon un angle oblique par rapport à la fois au canal de collecte (164) et au passage de refroidissement associé (300 ; 320 ; 340 ; 360).

6. Système de joint (200) selon la revendication 4 ou 5, comportant entre 10 et 100 passages de refroidissement (300 ; 320 ; 340 ; 360) et entre 10 et 100 passages d'alimentation (150) .

7. Système de joint (200) selon une quelconque revendication précédente, dans lequel le second élément (110) est couplé et configuré pour tourner avec un arbre rotatif (24 ; 25), et dans lequel le premier élément (102) est configuré pour rester stationnaire tandis que le second élément (110) tourne avec l'arbre rotatif (24 ; 25).

8. Système de joint (200) selon une quelconque revendication précédente, dans lequel :
les passages de refroidissement (320 ; 340 ; 360) sont des passages filetés (320 ; 340 ; 360) comportant des rainures ;
une distance entre un bord le plus extérieur des rainures des passages filetés (320 ; 340 ; 360) et la face du siège (114) est comprise entre 0,76 mm et 6,35 mm ; et
un angle (θ₁) formé entre un axe central de chaque passage de refroidissement (320 ; 340 ; 360) et la face du siège (114) est supérieur à zéro.

9. Système de joint (200) selon la revendication 4 ou l'une quelconque des revendications 5 à 8 en fonction de la revendication 4, dans lequel le système de joint (200) est un joint à face sèche, et dans lequel les passages d'alimentation (150) et les passages de refroidissement (300 ; 320 ; 340 ; 360) sont configurés pour fournir un fluide de refroidissement de telle sorte que le fluide de refroidissement reste séparé d'une interface où la face de joint (106) et la face de siège (114) sont en prise coulissante.

10. Procédé de fabrication du système de joint (200) selon une quelconque revendication précédente, le procédé comprenant :
la formation d'un précurseur du second élément (110) ; et
la formation des améliorations de surface (322 ; 342 ; 362) par au moins l'un parmi le taraudage et l'EDM.

11. Procédé selon la revendication 10, comprenant également la formation des précurseurs des passages de refroidissement (300 ; 320 ; 340 ; 360) par perçage.

12. Procédé selon la revendication 10 ou 11, comprenant la formation des améliorations de surface (322 ; 342 ; 362) par EDM, dans lequel l'EDM est un EDM en plongée avec une rotation d'une électrode EDM pendant la plongée.

13. Procédé d'utilisation du système de joint (200) selon une quelconque revendication précédente, le procédé comprenant :
la rotation du second élément (110) autour de l'axe (500) par rapport au premier élément (102) ;
la rotation entraînant des flux respectifs de fluide (162, 165) à travers les passages (300 ; 320 ; 340 ; 360) ; et
les flux (162, 165) refroidissent le second élément (110).

14. Procédé selon la revendication 13, dans lequel :
les améliorations de surface (322 ; 342 ; 362) induisent un tourbillon des flux respectifs dans les passages (300 ; 320 ; 340 ; 360).

15. Moteur à turbine à gaz (20) comprenant :
un carter de moteur (22), un ventilateur (42), une section de compresseur (28, 30), une section de turbine (26, 27) et un arbre rotatif (24 ; 25) ; et
le système de joint (200) selon une quelconque revendication précédente positionné à l'intérieur de la section de compresseur (28, 30) du moteur à turbine à gaz (20).
